# EUROPÄISCHE PATENTSCHRIFT

(11) **EP 1 861 236 B1**
(45) Veröffentlichungstag und Bekanntmachung des Hinweises auf die Patenterteilung: **15.09.2010**
(21) Anmeldenummer: 06708261.0
(22) Anmeldetag: 14.02.2006
(51) Int. Cl.: B29C 45/50

(54) **ANTRIEBSSYSTEM FÜR EINE PLASTIFIZIEREINHEIT EINER SPRITZGIESSMASCHINE**
DRIVE SYSTEM FOR A PLASTICISING UNIT OF AN INJECTION MOULDING MACHINE
SYSTEME D'ENTRAINEMENT POUR UNE UNITE DE PLASTIFICATION D'UNE MACHINE DE MOULAGE PAR INJECTION

(30) Priorität: 17.03.2005 DE 102005012337
(43) Veröffentlichungstag der Anmeldung: 05.12.2007
(73) Patentinhaber: KraussMaffei Technologies GmbH, 80997 München (DE)
(72) Erfinder: URBANEK, Otto, 81247 München (DE)
(74) Vertreter: Zollner, Richard
(86) Internationale Anmeldenummer: PCT/EP2006/050924
(87) Internationale Veröffentlichungsnummer: WO 2006/097394

(56) Entgegenhaltungen:
- DE-U- 1 987 375
- DE-U- 7 013 677
- US-A1- 2004 228 944
- PATENT ABSTRACTS OF JAPAN Bd. 013, Nr. 565 (M-907), 14. Dezember 1989 (1989-12-14) -& JP 01 235621 A (SUMITOMO HEAVY IND LTD), 20. September 1989 (1989-09-20)
- PATENT ABSTRACTS OF JAPAN Bd. 1996, Nr. 06, 28. Juni 1996 (1996-06-28) -& JP 08 039633 A (SUMITOMO HEAVY IND LTD), 13. Februar 1996 (1996-02-13)
- PATENT ABSTRACTS OF JAPAN Bd. 017, Nr. 133 (M-1383), 19. März 1993 (1993-03-19) -& JP 04 312823 A (ARETSUKUSU DENSHI KOUGIYOU KK), 4. November 1992 (1992-11-04)

## Beschreibung

Die vorliegende Erfindung betrifft ein Antriebssystem für eine Plastifiziereinheit einer Spritzgießmaschine gemäß dem Oberbegriff des Anspruchs 1.

Spritzgießmaschinen mit Plastifiziereinheiten zur Erzeugung einer Kunststoffschmelze sind seit mehreren Jahrzehnten bekannt. Ebenso lange gibt es Antriebssysteme für solche Plastifiziereinheiten.

In der Regel ist bei einer Plastifiziereinheit einer Spritzgießmaschine eine Plastifizierschnecke in einem Plastifizierzylinder aufgenommen. Die Herstellung der Kunststoffschmelze erfolgt durch Drehen der Plastifizierschnecke, wobei unter anderem Scherenergie in das Kunststoffmaterial eingebracht und dieses aufgeschmolzen wird. Das in Schmelzeform umgewandelte Kunststoffmaterial wird dabei nach vorne transportiert und sammelt sich kontinuierlich im Schneckenvorraum an. Gleichzeitig wird die Plastifizierschnecke zurückverfahren oder zurückgedrängt. Hat sich bei diesem sogenannten Dosiervorgang genügend Kunststoffschmelze im Schneckenvorraum angesammelt, so erfolgt durch Vorschieben der Plastifizierschnecke ein Einspritzen der Kunststoffschmelze in die Kavität eines Werkzeugs.

Für diesen Bewegungsablauf der Plastifizierschnecke ist somit sowohl ein Drehantrieb wie auch ein Axialantrieb bereitzustellen.

Die auf dem Markt erhältlichen Antriebssysteme sind vielfältig ausgeführt. So gibt es rein hydraulische Lösungen, die den Drehantrieb durch einen Hydromotor und den Axialvorschub durch eine Kolben-Zylinder-Lösung realisieren. Seit einigen Jahren gibt es aber auch rein "elektrische" Lösungen, bei denen sowohl der Drehantrieb, wie auch der Axialvorschub mittels Elektromotoren bewirkt wird. In diesem Zusammenhang verweisen wir auf die DE 43 44 335 A1, in der zwei koaxial hintereinander angeordnete Elektromotoren für das Antriebssystem einer Plastifiziereinheit vorgesehen sind. Der hintere Elektromotor ist zum Drehantrieb der Schnecke vorgesehen. Der vordere Elektromotor treibt über eine Spindel-Mutter-Kombination die Plastifizierschnecke in Axialrichtung an. Dabei wird die auf einer Spindel geführte Spindelmutter axial feststehend drehangetrieben, wodurch die mit der Spindelmutter zusammenwirkende Spindel axial vor oder zurück verschoben wird.

Neben den reinen hydraulischen oder elektrischen Antriebslösungen gibt es auch eine Vielzahl von Hybridlösungen, die elektrische und hydraulische Antriebe kombinieren.

Eine Ausführungsform mit einem Planetenübersetzungsgetriebe ist in der JP 08 039633 gezeigt, wobei der Drehantrieb und der Axialantrieb nach dem Getriebe in zwei separaten Kraftsträngen übertragen wird. Die in diesem Fall verwendete Spindel-Mutter-Kombination dient lediglich dem Axialvorschub.

In der US 2004/0228944 A1 ist eine Einspritzvorrichtung dargestellt, bei der mit zwei verschiedenen Elektromotoren der Drehantrieb bzw. der Axialantrieb für die Plastifizierschnecke realisiert sind. Die beiden Antriebe sind unabhängig voneinander ausgeführt. Aus Übersetzungsgründen ist zwischen dem Motor für den Drehantrieb und der Scheckenwelle ein Planetengetriebe geschalten. Dieses Planetengetriebe hat keinerlei Einfluss auf den Axialvorschub.

Eine weitere Ausführungsform einer Antriebseinrichtung für eine Spritzgießmaschine mit einem Planetengetriebe ist in der JP 01 235621 angegeben. Je nach Festsetzung des äußeren Hohlrades kann eine unterschiedliche Antriebsdämpfung für den Drehantrieb erreicht werden. Einen Einfluss auf den Axialvorschub für die Plastifizierschnecke hat das Planetengetriebe jedoch nicht.

Aufgabe der vorliegenden Erfindung ist es, ein weiteres Antriebssystem für eine Plastifiziereinheit einer eingangs genannten Spritzgießmaschine anzugeben, welches möglichst mit nur einem einzelnen Hauptantrieb beide oben genannten Antriebe realisiert.

Diese Aufgabe wird durch die Merkmale des Anspruchs 1 gelöst. Der Oberbegriff des Anspruchs 1 geht von den Dokumenten JP 08039633, US 2004/022 8944 und JP01235621 aus. Im Anspruch 31 ist auf eine Plastifiziereinheit mit einem solchen Antriebssystem abgestellt. Die Unteransprüche definieren vorteilhafte Ausgestaltungen des Antriebssystems.

Ein Kerngedanke der vorliegenden Erfindung ist die Kombination einer Spindel-Mutter-Lösung mit einem Momentenverteilergetriebe, wobei unter Verwendung der Spindel-Mutter-Kombination je nach Betriebsart des Momentenverteilergetriebes sowohl der Dreh- wie auch der Axialantrieb für die Plastifizierschnecke bewirkt wird. Als Sonderfall des Momentenverteilergetriebes kann ein Umlaufgetriebe angesehen werden.

Ein Umlaufgetriebe mit an einem entsprechenden Träger (auch Steg genannt) gelagerten Umlaufrädern besitzt eine bestimmte, je nach Konstruktion an sich bekannte Anzahl von Freiheitsgraden, die entsprechend der Beeinflussung der einzelnen Umlaufkomponenten eingeschränkt werden kann. Je nach Beeinflussung der Umlaufgetriebekomponenten können die verschiedensten Drehbewegungen hervorgerufen und eine Momentenverteilung vorgenommen werden. Auf diese Art und Weise ist es insbesondere in Kombination mit der Mutter-Spindel-Lösung möglich, sowohl einen Axialvorschub für die Plastifizierschnecke, wie auch einen rotatorischen Antrieb mit nur einem Hauptantrieb zu realisieren. Dabei sind weitere Nebenantriebe nicht ausgeschlossen. Sie können vielmehr vorteilhaft eingesetzt werden.

Die vorgenannt beschriebene Kombination aus einer Spindel-Mutter-Lösung und Momentenverteilergetriebe ist dabei zwischen einem Hauptantrieb und der Plastifizierschnecke geschaltet. Je nach Ankoppelung des Hauptantriebs bzw. der Plastifizierschnecke an die verschiedenen Getriebeelemente ist eine Vielzahl von grundsätzlichen Konstruktionslösungen möglich. In jedem Fall können je nach Konstruktionslösung durch eine entsprechende Beeinflussung geeigneter Getriebekomponenten alle Bewegungsabläufe - also der Drehantrieb sowie der Axialantrieb - für die Plastifizierschnecke realisiert werden.

Die in den Unteransprüchen aufgeführten Lösungen beschreiben verschiedene Grundkonstruktionen. So sind Ausführungsformen definiert, bei denen beispielsweise eine Spindel fest mit einem Haupt-Drehantrieb, (z.B. einem Elektromotor) verbunden ist. Gleichzeitig bildet die Spindelmutter das Sonnenrad eines Umlaufgetriebes. Das Umlaufgetriebe umfasst neben den Umlaufrädern gemäß einer konkreten Ausführungsform noch ein Hohlrad, welches mit der Plastifizierschnecke gekoppelt ist.

Natürlich ist es prinzipiell auch möglich, bei einer solchen Konstruktion die Plastifizierschnecke mit dem Träger der Umlaufräder zu koppeln. Überdies ist es auch möglich, die Spindelmutter integral mit dem Rotor des Motors auszubilden und die Spindel fest mit dem Sonnenrad des Umlaufgetriebes zu verbinden.

Auch kinematisch umgekehrte Möglichkeiten gegenüber den vorgenannten Lösungen können realisiert werden. So kann ein Hauptantrieb fest mit dem Hohlrad oder dem Träger der Umlaufräder verbunden und die Plastifizierschnecke fest mit der Spindel gekoppelt sein, welche in einer Spindelmutter läuft, die wiederum das Sonnenrad bildet. Auf diese Weise können ebenfalls die entsprechenden Dreh- und Axial-Bewegungen für die Plastifizierschnecke realisiert werden.

Bei allen Lösungen ist es ausschlaggebend, dass Vorrichtungen zur Beeinflussung der Drehungen von einzelnen Komponenten, beispielsweise der Hohlräder vorgesehen sind. Solche Vorrichtungen können Bremsvorrichtungen für das Hohlrad, den Träger der Umlaufräder, die Umlaufräder selbst oder das zentrale Sonnenrad sein. Alternativ können anstelle von solchen Bremsvorrichtungen auch Antriebsvorrichtungen verwendet werden, die gleichzeitig auch eine Bremsfunktion ausführen können. So ist es möglich, anstelle von einfachen Bremsvorrichtungen Elektromotore zu verwenden, die nicht nur eine Abbremsung einer Getriebekomponente, sondern auch eine Beschleunigung der vorher erwähnten Getriebekomponenten ermöglichen. Mit solchen Beschleunigungen ist prinzipiell auch eine Dynamikerhöhung eines bestimmten Prozesses (Aufschmelzen, Einspritzen) möglich.

Auch hier sind verschiedenste konstruktive Realisierungsmöglichkeiten denkbar, so kann eine Umlaufgetriebekomponente absolut (d.h. gegenüber einem feststehenden Gehäuse) gebremst oder beschleunigt werden. Es können aber auch Vorrichtungen vorgesehen werden, um verschiedene Getriebekomponenten relativ zueinander zu bremsen oder zu beschleunigen. Natürlich können anstelle der Elektromotore auch andere Antriebskomponenten wie ein Hydromotor, der ebenfalls als Hydropumpe wirkt, zur Beeinflussung der Drehung der jeweiligen Getriebekomponente verwendet werden

Die vorliegende Erfindung soll nachfolgend anhand von verschiedenen Ausführungsbeispielen und mit Bezug auf die beiliegenden Zeichnungen näher erläutert werden. Die Zeichnungen zeigen in:
- **Fig. 1:**: eine sehr schematische Prinzipdarstellung einer ersten Grundkonstruktion eines erfindungsgemäßen Antriebssystems,
- **Fig. 2:**: eine schematische Prinzipdarstellung einer konstruktiv ge- änderten Ausführungsform der Fig. 1,
- **Fig. 3:**: eine schematische Prinzipdarstellung einer weiteren konstruktiv geänderten Ausführungsform der Fig. 1,
- **Fig. 4:**: eine schematische Prinzipdarstellung einer zweiten Grund- konstruktion für ein erfindungsgemäßes Antriebssystem,
- **Fig. 5.**: eine schematische Prinzipdarstellung einer dritten Grundkon-
- struktion eines erfindungsgemäßen Antriebssystems,
- **Fig. 6:**: eine schematische Prinzipdarstellung einer vierten Grundkon- struktion eines erfindungsgemäßen Antriebssystems und
- **Fig. 7:**: eine Detailprinzipdarstellung einer Spindel-Mutter-Konstruktion.

Allen in den Figuren dargestellten Konstruktionen ist gemein, dass zwischen einem Hauptantrieb und einer Plastifizierschnecke eine Kombination aus einer Spindel-Mutter-Einheit und einem Umlaufgetriebe vorgesehen ist.

Als Umlaufgetriebe ist dabei vorliegend ein Getriebe bezeichnet, bei dem sich mindestens ein Rad außer um die eigene Achse auch noch um eine Zentralachse dreht. Je nach Realisierung des Umlaufgetriebes lassen sich beliebig komplexe Konstruktionen bilden. Einfache Getriebe bestehen beispielsweise aus einem Zentralrad - auch Sonnenrad genannt - zumindest einem Umlaufrad und einem Träger für das oder die Umlaufräder, welcher auch als Steg bezeichnet ist, sowie einem äußeren Hohlrad. Je nachdem, welches Glied als Gestell, Antrieb oder Abtrieb dient, ergeben sich verschiedenste Bewegungs- und Momentenverteilmöglichkeiten mit einer definierten Anzahl von Freiheitsgraden. Beim einfachsten Getriebe mit drei umlaufenden Gliedern liegt ein Freiheitsgrad 2 vor.

Die nachfolgenden Ausführungsbeispiele sind in den Figuren allesamt nur schematisch dargestellt, um die prinzipielle Funktionsweise erläutern zu können. Eine genaue Konstruktionen ist für einen Fachmann auf dem vorliegenden Gebiet jedoch ohne weiteres möglich.

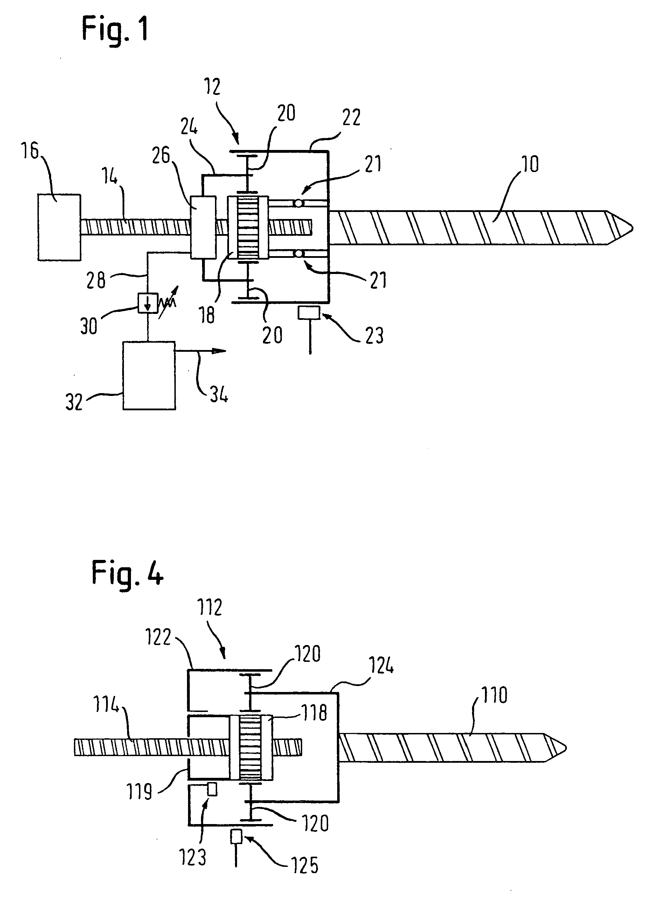

Fig. 1 zeigt eine erste, stark schematisierte Ausführungsform einer Grundkonstruktion für ein erfindungsgemäßes Antriebssystem für eine Plastifiziereinheit einer Spritzgießmaschine. Dabei ist eine Plastifizierschnecke 10 schematisch dargestellt, die in einem nicht weiter gezeigten Plastifizierzylinder aufgenommen ist. Die Plastifizierschnecke 10 soll rotatorisch aber auch axial angetrieben werden können.

Als Hauptantrieb wird einzig ein High-Torque-Elektromotor 16 verwendet, dessen Rotor mit einer Spindel 14 koaxial und fest verbunden ist. Die Spindel ist somit axial feststehend aber rotatorisch drehbar angeordnet. Auf der Spindel 14 läuft eine Spindelmutter 18, die mit der Spindel 14 in bekannter Weise zusammenwirkt. Bei einer Relativdrehung zwischen Spindelmutter 18 und Spindel 14 kommt es zu einer Axialverschiebung der Spindelmutter 18 auf der Spindel 14.

Die Spindelmutter 18 bildet gleichzeitig das zentrale Sonnenrad eines Umlaufgetriebes, von dem in Fig. 1 überdies zwei Umlaufräder 20, die als Stirnzahnräder ausgebildet sind, dargestellt sind. Radial außerhalb und koaxial zu dem zentralen Sonnenrad 18 ist ein Hohlrad 22 mit einer Innenverzahnung angeordnet, auf der die Umlaufräder 20 ebenfalls ablaufen.

Das Hohlrad 22 ist bei dieser Grundkonstruktion der Fig. 1 fest mit der Plastifizierschnecke gekoppelt. Die Umlaufräder 20 sind an einem Träger 24 gelagert, der sich um die gleiche Achse wie das Sonnenrad 18 und das Hohlrad 22 drehen kann. Vorliegend ist der Träger 24 mit einer Hydropumpe 26 derart verbunden, dass die Hydropumpe bei einer Drehung des Trägers 24 drehangetrieben wird.

Die Hydropumpe 26 ist über eine Hydraulikleitung 28 und unter Zwischenschaltung eines einstellbaren Proportionalventils 30 mit einem Hydraulik-akkumulator 32 verbunden, aus dem eine Versorgungsleitung 34 abgeht.

Überdies ist bei der Ausführungsform nach Fig. 1 eine betätigbare Bremseinrichtung 23 schematisch dargestellt, welche so ausgestaltet und angeordnet ist, dass sie mit dem Hohlrad 22 zur Bremsung des Hohlrads 22 zusammenwirken kann. Bei der Bremseinrichtung 23 kann es sich um eine einfache Konstruktion mit Bremsbacken handeln, die bei entsprechender Betätigung eine gewünschte Festsetzung des Hohlrads 22 bewirken.

Um eine Axialabstützung zwischen der Plastifizierschnecke 10 und der Spindelmutter 18, welches auch als Sonnenrad dient, sicherzustellen, ist zwischen diesen beiden Elementen ein Kugellager 21, welches in Fig. 1 nur schematisch angedeutet ist, angeordnet. Dieses Kugellager ist bei den Fig. 4 bis 6 weggelassen.

Die Funktionsweise der ersten Grundkonstruktion gemäß Fig. 1 soll nun nachfolgend erläutert werden:

Der Elektromotor 16 dient als Hauptantrieb sowohl für die Einspritzung (Axialvorschub) als auch für den rotatorischen Antrieb (Dosiervorgang). Soll ein Einspritzvorgang durchgeführt werden, so wird das Hohlrad 22 über die Bremseinrichtung 23 festgesetzt. Gleichzeitig wird über das Proportionalventil 30 der Staudruck in der Hydraulikleitung 28 signifikant erhöht. Dadurch muss die Pumpe 26 gegen einen hohen Staudruck arbeiten, was zu einer Behinderung der Drehung des Trägers 24 für die Umlaufräder führt. Im Idealfall wird der Träger 24 für die Umlaufräder rotatorisch ebenfalls festgelegt. Dreht sich weder der Träger 24, noch das Hohlrad 22, so sind auch die Umlaufräder 22 festgesetzt, was dazu führt, dass auch das Sonnenrad 18 keine Drehbewegung durchführen kann. Wird die Spindel 14 über den Hauptantrieb 16 dennoch angetrieben, so kommt es aufgrund der Zusammenwirkung zwischen Spindel 14 und Spindelmutter 18 zu einer Axialverschiebung der Spindelmutter. Bei einer richtig durchgeführten Drehbewegung des Hauptmotors 16 führt dies zu einer Axialverschiebung der Spindelmutter nach vorne, die sich über die Abstützung mittels dem Kugellager 21 auf die Plastifizierschnecke 10 überträgt und diese im (nicht dargestellten) Plastifizierzylinder nach vorne drückt. Dadurch wird die im Schneckenvorraum befindliche Schmelze in die Kavität eines nicht dargestellten Werkzeugs ausgedrückt.

Nach dem Einspritzvorgang wird die Bremsvorrichtung 23 gelöst und der Staudruck in der Hydraulikleitung 28 verringert. Durch die Reibung der Plastifizierschnecke 10 im Plastifizierzylinder wird sich die Plastifizierschnecke nur unter Aufbringung eines bestimmten Drehmoment in Drehung versetzen lassen. Dreht sich die Plastifizierschnecke 10 nicht und der Träger 24 nur wenig, so käme es ebenfalls wieder zu einer Verschiebung des Sonnenrades 18 nach vorne, bis ein bestimmter Druck aufgebaut ist, der keine weitere Verschiebung der Spindelmutter 18 nach vorne mehr zulässt. Verschiebt sich die Spindelmutter 18 nicht mehr nach vorne, so wird sie jedoch automatisch in eine Drehbewegung versetzt, welche über die Umlaufräder 20 auf die Plastifizierschnecke 10 übertragen wird. Dadurch erfolgt eine Plastifizierung des Kunststoffmaterials, und Schmelze sammelt sich im Schneckenvorraum. Dadurch baut sich ein weiterer Druck auf, der zu einer Zurückschiebung der Mutter 18 führt, was wiederum in einer Drehbewegung resultiert, welche über die Umlaufräder 20 an das Hohlrad 22 übertragen wird. Das Zurückschieben der Plastifizierschnecke 10 aufgrund des durch die Schmelze im Schneckenvorraum hervorgerufenen Staudrucks resultiert also in einer Beschleunigung der Rotation der Plastifizierschnecke. Der Druck im Schneckenvorraum wird sich dabei so einstellen, dass sich ein Gleichgewicht zwischen der an sich nach vorne drängenden Spindelmutter 18, der Umdrehung der Plastifizierschnecke mit der entsprechenden Reibung und dem Staudruck einstellt. Beeinflussen lassen sich die verschiedenen Rotationswerte durch den Staudruck in der Hydraulikleitung 28 über das Proportionalventil 30 und die Bremseinrichtung 23. Natürlich muss dabei die Konstruktion der Spindel-Mutter-Lösung, insbesondere die Gewindesteigung und -ausbildung, so gewählt werden, dass die Spindel-Mutter ab einem bestimmten Staudruck nach hinten verschoben werden kann.

Würde der Staudruck in der Hydraulikleitung 28 auf Null abgesenkt, so würde die Hydropumpe 26 gegen keinen Widerstand mehr arbeiten müssen und könnte sich zusammen mit dem Träger 24 frei drehen, was zu einer losen Umdrehung der Umlaufräder um das Sonnenrad führen würde. Bei einem Antrieb der Spindel 14 über den Hauptantrieb 16 würde sich dann einzig das Sonnenrad 18 drehen und die Umlaufräder 20 um das Sonnenrad 18 umlaufen. Je nach Erhöhung des Staudrucks in der Hydraulikleitung 28 wird die Umlaufgeschwindigkeit des Trägers 24 reduziert, was dazu führt, dass die Drehung der Spindelmutter 18 in eine Drehung des Hohlrads 22 und damit der Plastifizierschnecke überführt wird.

Insgesamt lässt mit dieser Anordnung unter Verwendung nur eines einzigen Elektromotors sowohl der Axial- wie auch der rotatorische Antrieb der Plastifizierschnecke 10 realisieren.

Die Verwendung des Hydraulikakkumulators 32 ist deshalb von Vorteil, weil der darin aufgebaute Druck über die Versorgungsleitung 34 wieder anderen Systemen zur Verfügung gestellt werden kann. Beispielsweise kann die an sich notwendige Anpressung einer Plastifiziervorrichtung an ein Formwerkzeug mittels dieses Drucks und unter Verwendung einer oder mehrerer Kolben-Zylinder Einheiten realisiert werden. Auch die Betätigung von Kernzugelementen in einer Schließeinheit mittels dieser Druckquelle bietet sich an.

Die Regelung des Antriebs ist bei einer Messung des Staudrucks und der entsprechende Regelung des Druckproportionalventils in jedem Fall möglich.

Natürlich sind auch eine Vielzahl von konstruktiven Änderungen der grundsätzlichen Ausführungsform in Fig. 1 möglich, ohne von diesem Grundprinzip abzuweichen. So ist es denkbar, als Antrieb 16 einen High-Torque-Motor zu verwenden, dessen Rotor gleichzeitig als Spindelmutter ausgebildet oder dessen Rotor integral mit einer Spindelmutter verbunden ist. In diesem Fall würde die Spindel 14 fest mit dem Sonnenrad verbunden sein. Die axiale Relativbewegung zwischen Spindel 14 und Spindelmutter würde dann radial innerhalb des Elektromotors 16 vonstatten gehen. Allerdings hätte diese Ausführungsform den Nachteil, dass eine größere Drehmasse beschleunigt bzw. abgebremst werden müßte.

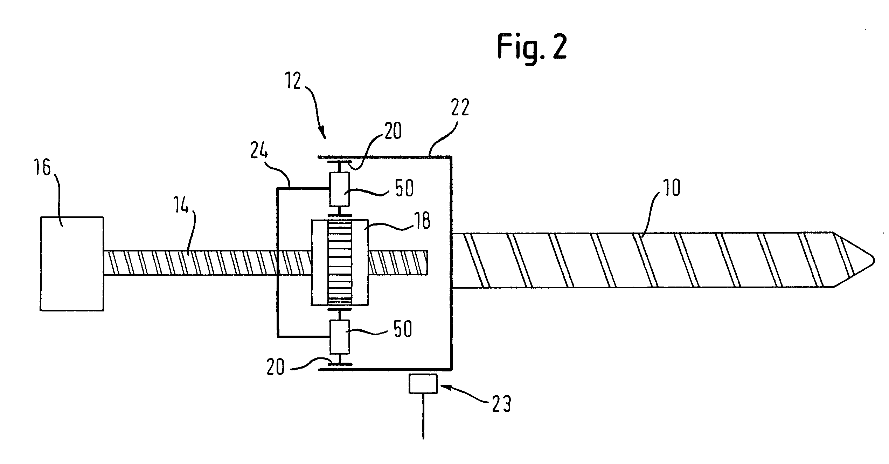

Auch können die Einrichtungen zur Beeinflussung der Drehgeschwindigkeiten von Träger 24 und Hohlrad 22 anders ausgebildet sein. So ist in Fig. 2 eine Ausführungsform gezeigt, bei der radial innerhalb der Umlaufräder 20 kleine Hilfs-Elektromotoren 50 angeordnet sind, über die sich ein relativ hohes Moment ausbilden lässt. Die Elektromotoren besitzen Statoren (nicht näher dargestellt), welche an dem Träger 24 gelagert gehalten sind. Der Rotor des Elektromotors 50 ist mit einem zugehörigen Umlaufrad 20 gekoppelt. Auf diese Art und Weise können die Umlaufräder selbst in ihrer Drehung beeinflusst werden. Zudem ist - wie auch in Fig. 1 beschrieben - das Hohlrad 22 über die Bremsvorrichtung 23 abbremsbar.

Bei der Ausführungsform gemäß Fig. 2 wird beim Einspritzvorgang das Hohlrad 22 gebremst und die Umlaufräder 20 werden möglichst festgesetzt. Erfolgt keine Drehung des Hohlrads und keine Drehung der Umlaufräder 20, so würde sich auch die Spindelmutter 18 nicht drehen können, was bei einem entsprechenden Antrieb des Hauptmotors 16 zu einer Axialbewegung der Spindelmutter 18 führt. Wird die Bremswirkung der Bremseinrichtung 23 gelockert, so kann sich das Hohlrad 22 drehen, wobei die Rotationsgeschwindigkeit wiederum von der Rotationsgeschwindigkeit der Umlaufräder 20 abhängt. Diese jedoch wiederum ist von den Elektromotoren 50 beeinflusst. Die Elektromotoren 50 sollten gleichzeitig als Generatoren wirken können, so dass entsprechend elektrische Energie gewonnen wird, welche evtl. gespeichert und wieder zum Antrieb verwendet werden kann.

Insbesondere hat der Einsatz von Nebenantrieben, wie dies die Elektromotore bei der Ausführungsform in Fig. 2 darstellen, den Vorteil, dass - bei abgebremsten Hohlrad 22 - die Spindelmutter mit einem Drehsinn angetrieben werden kann, der entgegengesetzt dem Drehsinn der Spindel ist. Dies führt zu einer Dynamikerhöhung des Systems. Insbesondere können damit die Einspritzgeschwindigkeiten erhöht und die Zeit zum Erreichen einer maximalen Geschwindigkeit verkürzt werden. Eine solche Dynamikerhöhung ist überall dort möglich, wo mit einem Nebenaggregat die Spindelmutter mit entgegengesetztem Drehsinn zur Schnecke angetrieben werden kann.

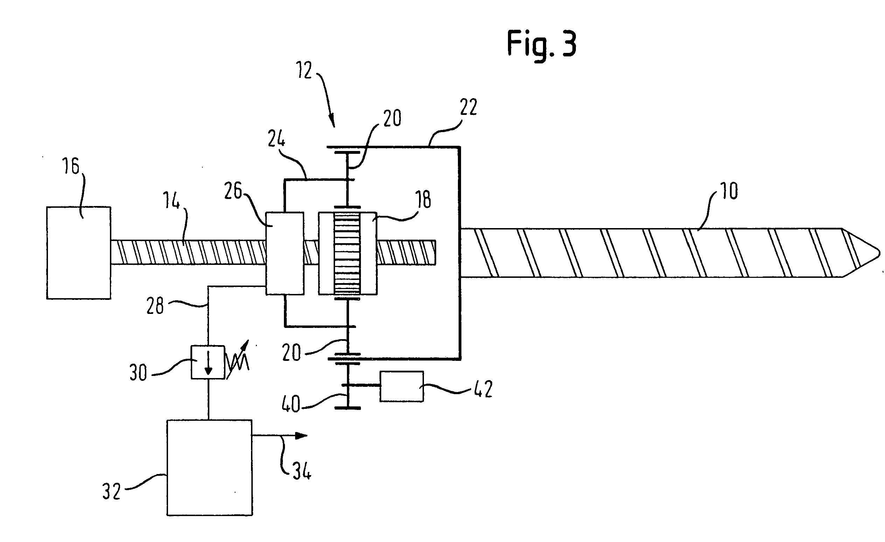

Eine andere Alternative der Grundkonstruktion aus Fig. 1 ist in Fig. 3 dargestellt. Fig. 3 zeigt in Abwandlung von Fig. 1 die Ersetzung der Bremsvorrichtung 23 durch eine Kombination aus einem Ritzel 40 und einem Hilfs-Elektromotor 42, wobei das Ritzel mit einer Außenzahnung des Hohlrads 22 kämmt. Auch hierbei lässt sich die Umdrehungsgeschwindigkeit des Hohlrads beeinflussen. Gegenüber der Ausführungsform gemäß Fig. 1 lässt sich überdies aber auch Antrieb des Hohlrads 22 erreichen.

Eine weitere zweite Grundkonstruktion für ein erfindungsgemäßes Antriebssystem ist in Fig. 4 dargestellt. In der Ausführungsform gemäß Fig. 4 ist eine Plastifizierschnecke 110 nunmehr mit dem Träger 124 für die Umlaufräder 120 verbunden. Nunmehr lässt sich das Hohlrad 122 über eine Bremsvorrichtung 123 relativ zum zentralen Sonnenrad 118 festsetzen. Dazu ist an das zentrale Sonnenrad 118 eine Bremstrommel 119 angebracht, mit welcher die Bremseinrichtung 123 zusammenwirkt. Wird nun die Spindel 114 über einen hier nicht dargestellten Hauptantrieb angetrieben, und das Hohlrad 122 gegenüber dem Sonnenrad 118 über die Bremseinrichtung 123 festgesetzt, so können sich auch die Umlaufräder 120 nicht drehen, was dazu führt, dass der Träger 124 die rotatorischen Bewegungen von dem Hohlrad 122 und dem zentralen Sonnenrad 118 mitmacht.

Wird zudem eine weitere Bremsvorrichtung 125 am Außenumfang des Hohlrads 122 betätigt und das Hohlrad festgesetzt, so kommt es unweigerlich zu einem Axialvorschub der Plastifizierschnecke 110, da sich die Spindel 114 gegenüber der Spindelmutter 118 dreht. Wird die Bremseinrichtung 125 gelöst, so kann sich das Hohlrad 122 prinzipiell drehen, was bei einer weiteren Betätigung der Bremseinrichtung 123 zu einem Mitdrehen des Trägers 124 führt. Wiederum stellt sich der Staudruck der Schmelze im Schneckenvorraum in einer Weise ein, dass insgesamt ein Kräftegleichgewicht gebildet ist. Eine Beeinflussung der Drehgeschwindigkeit der Schnecke kann durch eine mehr oder weniger starke Lösung der Bremsvorrichtung 123 erzielt werden.

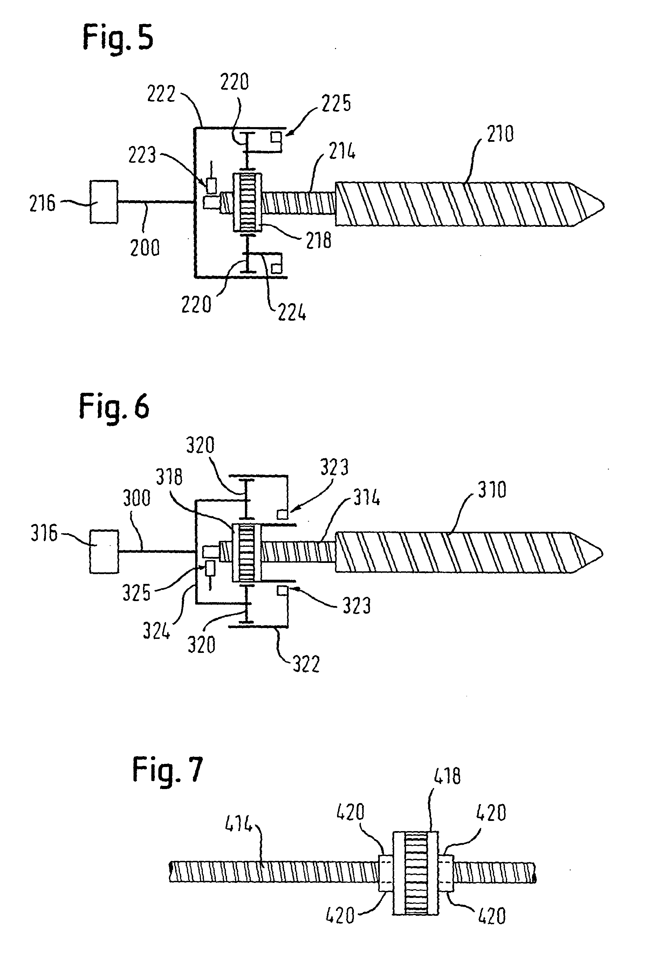

Eine weitere Grundkonzeption ist in Fig. 5 zu erkennen. Die Ausführungsvariante in Fig. 5 unterscheidet sich gegenüber denjenigen in den vorherigen Figuren dadurch, dass eine Spindel 214 nunmehr koaxial und fest mit der Plastifizierschnecke 210 verbunden ist. Die Spindel wirkt wiederum mit einer Spindelmutter 218 zusammen, die wiederum das Sonnenrad 218 des Umlaufgetriebes darstellt. Radial außerhalb des Sonnenrads 218 sind wiederum Umlaufräder 220 angeordnet, die an einem Träger 224 gelagert sind. Der Träger 224, der sich selbst um die Achse des Sonnenrads 218 drehen kann, ist mittels einer Bremsvorrichtung 225 gegenüber einem Hohlrad 222 festsetzbar. Die Spindel 214 und damit die Plastifizierschnecke 210 selbst ist wiederum mittels einer weiteren Bremseinrichtung 223 absolut festsetzbar.

Zudem ist das Hohlrad 222 mit einer Welle 200 starr mit einem Hauptantrieb 216 verbunden.

Funktionsmäßig wird nun das Hohlrad 222 mittels des Elektromotor 216 über die Welle 200 angetrieben. Ist die Bremseinrichtung 225 betätigt, so ist der Träger 224 gegenüber dem Hohlrad 222 relativ festgesetzt, wodurch sich auch die Umlaufräder 220 nicht drehen können, so dass sich in der gleichen Winkelgeschwindigkeit wie das Hohlrad auch die Spindelmutter 218 dreht. Wird die Spindel 214 über die Bremseinrichtung 223 festgesetzt, so kommt es zu einer Axialverschiebung der Plastifizierschnecke 210. Zum Dosieren kann die Bremseinrichtung 223 etwas gelöst werden, so dass die Plastifizierschnecke 210 sich in Drehung versetzen kann. Die Drehgeschwindigkeit lässt sich durch die Stärke der Feststellungen der Bremseinrichtungen 223 und 225 einstellen.

Natürlich können auch hier wiederum, anstelle der Bremseinrichtungen 223 und 225, aktive Antriebe verwendet werden, die sowohl antriebsmäßig als auch bremsmäßig wirken. Werden diese Antriebe gleichzeitig als Generatoren verwenden, so lässt sich auch wieder Energie rückgewinnen, die wiederum in das System zurück einspeisbar ist.

Eine letzte grundsätzliche Konstruktion ist in Fig. 6 dargestellt. Diese Konstruktion unterscheidet sich gegenüber derjenigen in Fig. 5 dadurch, dass der Antriebsmotor 316 über die Welle 300 nunmehr mit dem Träger 324 für die Umlaufräder 320 gekoppelt ist. Das Hohlrad 322 lässt sich gegenüber dem Sonnenrad 318, welches wiederum als Spindelmutter ausgebildet ist, festlegen. Dazu ist eine Bremsvorrichtung 323 ausgebildet, die mit einer Trommel zusammenwirkt, die integral mit dem Sonnenrad 318 ausgebildet ist. Wiederum ist am hinteren Ende der Spindel 314 ein Zapfen angeordnet, der mit einer Bremseinrichtung 325 zusammenwirkt. Wiederum lässt sich der Axialvorschub der Plastifizierschnecke 310 sowie der rotatorische Antrieb der Plastifizierschnecke 310 durch eine Kombination der Betätigung der Bremseinrichtungen 323 und 325 bewerkstelligen. Beispielsweise werden bei einer Festsetzung des Hohlrads 322 über die Bremseinrichtung 323 mit dem Sonnenrad gleichzeitig die Umlaufräder 320 festgesetzt. Dies bedeutet, dass sich die Spindelmutter 318 mit der gleichen Umdrehungsgeschwindigkeit wie der Träger 324 dreht. Wird nunmehr die Spindel 314 über die Bremseinrichtung 325 festgesetzt, so erfolgt eine Axialverschiebung der Plastifizierschnecke 310 nach vorne. Werden die Bremseinrichtungen 323 und 325 gelöst, so kann sich nach einer entsprechenden Dosierung der Bremseinrichtungen wieder eine Umdrehung für die Plastifizierschnecke 310 einstellen, wobei jeweils ein Gleichgewicht zwischen dem Reaktionsdrehmoment im Plastifizierzylinder, welches durch die Reibung bei der Erzeugung der Schmelze hervorgerufen wird, dem Schmelzestaudruck und den konstruktiven Gegebenheiten einstellt.

In Figur 7 ist eine Möglichkeit angedeutet, die Relativbewegung zwischen einer Spindel 414 und einer Spindelmutter 418 durch zwei buchsenartige, seitlich an der Spindelmutter 418 angeordnete Bremseinrichtungen 420 zu beeinflussen. Diese Bremseinrichtungen können mit einer Klemmwirkung arbeiten und die Spindel 414 so relativ zur Spindelmutter 418 abbremsen.

Natürlich lassen sich alle Bremseinrichtungen auf einfache Weise mit Bremsklötzen realisieren. Es ist jedoch jederzeit möglich, allgemein Vorrichtungen vorzusehen, welche die Drehgeschwindigkeit der einzelnen Getriebekomponenten beeinflussen. So ist es, wie in den Figuren 2 und 3 dargestellt, möglich, Elektromotoren vorzusehen, die gleichzeitig als Generatoren wirken. Gleichzeitig ist es möglich, Hydromotoren/-pumpen einzusetzen, die beim Pumpenbetrieb gegen einen einstellbaren Staudruck arbeiten können. Auch der Einsatz von Wirbelstrombremsen ist denkbar. In jedem Fall ist es notwendig, dass durch eine Beeinflussung der Umdrehungsgeschwindigkeit von einzelnen Umlaufgetriebekomponenten entweder absolut oder in Relation zu anderen Umlaufgetriebekomponenten eine Beeinflussung des Bewegungsablaufs möglich ist.

Natürlich sind auch andere Grundkonstruktionen und Festlegungen von Getriebeteilen als oben dargestellt möglich. In diesem Zusammenhang sollen die vorliegenden Ausführungen den Schutz nicht beschränken, sondern lediglich beispielhaft sein.

Ein wesentlicher Punkt ist jedoch die Kombination einer Spindel-Mutter-Lösung mit einem Momentenverteilergetriebe, wobei diese Kombination zwischen einem Hauptantrieb und einer Plastifizierschnecke zwischengeschaltet sind.

Auf diese Art und Weise lassen sich die verschiedensten Lösungen für ein Antriebssystem angeben, welche mit nur einer Hauptantriebseinheit auskommen. Werden Hilfsantriebssysteme für verschiedene Getriebekomponenten verwendet, so führt dies zu noch größeren Einsatzmöglichkeiten für die beschriebenen Konstruktionen.

## Patentansprüche

1. Antriebssystem für eine Plastifiziereinheit einer Spritzgießmaschine, bei der
- eine Plastifizierschnecke (10, 110, 210, 310) axial verschiebbar und rotatorisch antreibbar in einem Plastifizierzylinder aufgenommen ist,
- mit zumindest einem Antriebsmotor (16, 216, 316) zum Antreiben der Plastifizierschnecke (10, 110, 210, 310) und
- einer Spindel-Mutter-Kombination (14, 18: 114, 118; 214, 218; 314, 318) zur Erzeugung der Axialbewegung der Plastifizierschnecke (10, 110, 210, 310) , wobei zwischen dem Antriebsmotor (16, 216, 316) und der Plastifizierschnecke (10, 110, 210, 310) Momentenverteilergetriebe vorgesehen ist,
**dadurch gekennzeichnet,**
**dass** die Spindel-Mutter-Kombination (14, 18: 114, 118; 214, 218; 314, 318) in Abhängigkeit von der Betriebsart des Momentenverteilergetriebes auch zur Übertragung der Drehbewegung für die Plastifizierschnecke (10, 110, 210, 310) dient.

2. Antriebssystem nach Anspruch 1,
**dadurch gekennzeichnet,**
**dass** das Momentenverteilergetriebe ein Umlaufgetriebe (12, 112, 212, 312) ist, welches zumindest ein Sonnenrad (18, 118, 218, 318) und zumindest ein Umlaufrad (20, 120, 220, 320) aufweist und welches antriebsseitig mit dem Antriebsmotor ((16, 216, 316) und abtriebsseitig mit der Plastifizierschnecke (10, 110, 210, 310) gekoppelt ist.

3. Antriebssystem nach Anspruch 2,
**dadurch gekennzeichnet,**
**dass** koaxial zu dem Sonnenrad (18, 118, 218, 318) ein Hohlrad (22, 122, 222, 322) vorgesehen ist.

4. Antriebssystem nach Anspruch 2 oder 3,
**dadurch gekennzeichnet,**
**dass** ein Rotor des Antriebsmotors (16) fest mit der Spindel (14, 114) gekoppelt ist und dass das Sonnenrad (18, 118) als Spindelmutter ausgebildet ist oder dass der Rotor mit der Spindelmutter gekoppelt ist und die Spindel fest mit dem Sonnerad verbunden ist.

5. Antriebssystem nach Anspruch 4,
**dadurch gekennzeichnet,**
**dass** die Plastifizierschnecke (10) mit dem Hohlrad (22) fest verbunden ist.

6. Antriebssystem nach Anspruch 5,
**dadurch gekennzeichnet,**
**dass** eine Vorrichtung (26, 30) zur Beeinflussung der Umlaufgeschwindigkeit der Umlaufräder (20) vorgesehen ist.

7. Antriebssystem nach Anspruch 6,
**dadurch gekennzeichnet,**
**dass** es sich bei der Vorrichtung um einen Hydropumpe (26) handelt, welche gegen einen Staudruck fördert.

8. Antriebssystem nach Anspruch 7,
**dadurch gekennzeichnet,**
**dass** ein Proportionalventil (30) vorgesehen ist, mit dem der Staudruck einstellbar ist.

9. Antriebssystem nach einem der Ansprüche 5 bis 8,
**dadurch gekennzeichnet,**
**dass** eine Vorrichtung zur Beeinflussung der Rotationsgeschwindigkeit der Umlaufräder (20) vorgesehen ist.

10. Antriebssystem nach Anspruch 9,
**dadurch gekennzeichnet,**
**dass** es sich bei der Vorrichtung zur Beeinflussung der Rotationsgeschwindigkeit der Umlaufräder um einen hydraulischen, pneumatischen oder elektrischen Antrieb, insbesondere einen Elektromotor, handelt.

11. Antriebssystem nach einem der Ansprüche 6 bis 8,
**dadurch gekennzeichnet,**
**dass** ein Hydraulik-Akkumulator (32) vorgesehen ist, der mittels der Hydropumpe (26) aufgeladen wird.

12. Antriebssystem nach einem der Ansprüche 3 bis 8,
**dadurch gekennzeichnet,**
**dass** eine Einrichtung (23) zur Beeinflussung der Rotationsgeschwindigkeit des Hohlrades (22) vorgesehen ist.

13. Antriebssystem nach Anspruch 12,
**dadurch gekennzeichnet,**
**dass** es sich bei der Einrichtung (23) um eine Bremseinrichtung zur Abbremsung des Hohlrades (22) handelt.

14. Antriebssystem nach Anspruch 12,
**dadurch gekennzeichnet,**
**dass** es sich bei der Einrichtung (23) um einen Antrieb wahlweise zur Abbremsung oder Beschleunigung des Hohlrades (22) handelt.

15. Antriebssystem nach Anspruch 3 oder 4,
**dadurch gekennzeichnet,**
**dass** die Plastifizierschnecke (110) mit dem Steg (124) der Umlaufräder (120) gekoppelt ist.

16. Antriebssystem nach Anspruch 15,
**dadurch gekennzeichnet,**
**dass** eine Vorrichtung, insbesondere ein Antrieb oder eine Bremsvorrichtung, zur Beeinflussung der Umlaufgeschwindigkeit des Hohlrades (122) vorgesehen ist.

17. Antriebssystem nach Anspruch 16,
**dadurch gekennzeichnet,**
**dass** eine Einrichtung zur Beeinflussung der Relativbewegung zwischen dem Hohlrad (122) und dem Sonnenrad (118) vorgesehen ist.

18. Antriebssystem nach Anspruch 12,
**dadurch gekennzeichnet,**
**dass** die Vorrichtung zur Beeinflussung der Relativbewegung zwischen Hohlrad (122) und Sonnenrad (118) eine gegen einen Staudruck fördernde Hydropumpe oder einen Elektromotor umfasst.

19. Antriebssystem nach Anspruch 12,
**dadurch gekennzeichnet,**
**dass** der Staudruck über ein Proportionalventil einstellbar ist.

20. Antriebssystem nach Anspruch 3,
**dadurch gekennzeichnet,**
**dass** der Antriebsmotor (216) fest mit dem Hohlrad (222) verbunden ist, dass das Sonnenrad (218) als Spindelmutter ausgebildet ist und die Spindel (214) fest mit der Plastifizierschnecke (210) verbunden ist.

21. Antriebssystem nach Anspruch 20,
**dadurch gekennzeichnet,**
**dass** eine Vorrichtung zur Beeinflussung der Umlaufgeschwindigkeit der Umlaufräder (220) vorgesehen ist.

22. Antriebssystem nach Anspruch 21,
**dadurch gekennzeichnet,**
**dass** es sich bei der Vorrichtung um einen gegen einen Staudruck fördernde Hydropumpe oder einen Elektromotor handelt.

23. Antriebssystem nach Anspruch 22,
**dadurch gekennzeichnet,**
**dass** ein Proportionalventil vorgesehen ist, mit dem der Staudruck einstellbar ist.

24. Antriebssystem nach einem der Ansprüche 22 oder 23,
**dadurch gekennzeichnet,**
**dass** ein Hydraulik-Akkumulator vorgesehen ist, der mittels der Hydropumpe aufgeladen wird.

25. Antriebssystem nach einem der Ansprüche 15 bis 19,
**dadurch gekennzeichnet,**
**dass** eine Einrichtung zur Beeinflussung der Relativgeschwindigkeit zwischen Hohlrad (222) und dem als Spindelmutter ausgebildeten Sonnenrad (218) vorgesehen ist.

26. Antriebssystem nach Anspruch 2 oder 3,
**dadurch gekennzeichnet,**
**dass** der Antriebsmotor (316) fest mit dem Steg (324) der Umlaufräder gekoppelt ist, dass das Sonnenrad (318) als Spindelmutter ausgebildet ist und die Spindel (310) fest mit der Plastifizierschnecke (310) verbunden ist.

27. Antriebssystem nach Anspruch 26,
**dadurch gekennzeichnet,**
**dass** eine Vorrichtung zur Beeinflussung der Relativbewegung zwischen dem Hohlrad (322) und dem Sonnenrad (318) vorgesehen ist.

28. Antriebssystem nach Anspruch 27,
**dadurch gekennzeichnet,**
**dass** die Vorrichtung zur Beeinflussung der Relativbewegung zwischen dem Hohlrad (322) und dem Sonnenrad (318) eine gegen einen Staudruck fördernde Hydropumpe oder einen Elektromotor umfasst.

29. Antriebssystem nach Anspruch 23,
**dadurch gekennzeichnet,**
**dass** der Staudruck über ein Proportionalventil einstellbar ist.

30. Antriebssystem nach einem der vorhergehenden Ansprüche,
**dadurch gekennzeichnet,**
**dass** eine Vorrichtung zur Beeinflussung der Relativdrehung zwischen der Spindel und der Spindelmutter vorgesehen ist.

31. Plastifiziereinheit mit einer in einem Plastifizierzylinder aufgenommenen Plastifizierschnecke umfassend ein Antriebssystem gemäß einem der Ansprüche 1 bis 29.

## Claims

1. Drive system for a plasticizing unit of an injection moulding machine, in which
- a plasticizing screw (10, 110, 210, 310) is held so as to be axially displaceable and rotatably drivable in a plasticizing cylinder,
- with at least one drive motor (16, 216, 316) to drive the plasticizing screw (10, 110, 210, 310) and
- a spindle-nut combination (14, 18; 114, 118; 214, 218; 314, 318) for producing the axial movement of the plasticizing screw (10, 110, 210, 310),
wherein between the drive motor (16, 216, 316) and the plasticizing screw (10, 110, 210, 310) a torque distributor gear is provided,
**characterized in that**
the spindle-nut combination (14, 18; 114, 118; 214, 218; 314, 318) as a function of the type of operation of the torque distributor gear also serves for the transmission of the rotary movement for the plasticizing screw (10, 110, 210, 310).

2. Drive system according to Claim 1,
**characterized in that**
the torque distributor gear is an epicyclic gear (12, 112, 212, 312), which has at least one sun wheel (18, 118, 218, 318) and at least one planet wheel (20, 120, 220, 320) and which is coupled on the drive side with the drive motor (16, 216, 316) and on the output side with the plasticizing screw (10, 110, 210, 310).

3. Drive system according to Claim 2,
**characterized in that**
a hollow wheel (22, 122, 222, 322) is provided coaxially to the sun wheel (18, 118, 218, 318).

4. Drive system according to Claim 2 or 3, **characterized in that**
a rotor of the drive motor (16) is securely coupled with the spindle (14, 114) and that the sun wheel (18, 118) is constructed as a spindle nut or that the rotor is coupled with the spindle nut and the spindle is securely connected with the sun wheel.

5. Drive system according to Claim 4,
**characterized in that**
the plasticizing screw (10) is securely connected with the hollow wheel (22).

6. Drive system according to Claim 5,
**characterized in that**
a device (26, 30) is provided to influence the rotational speed of the planet wheels (20).

7. Drive system according to Claim 6,
**characterized in that**
the device is a hydraulic pump (26), which conveys against a back pressure.

8. Drive system according to Claim 7,
**characterized in that**
a proportional valve (30) is provided, by which the back pressure is able to be adjusted.

9. Drive system according to one of Claims 5 to 8, **characterized in that**
a device is provided to influence the rotational speed of the planet wheels (20).

10. Drive system according to Claim 9,
**characterized in that**
the device for influencing the rotational speed of the planet wheels is a hydraulic, pneumatic or electric drive, in particular an electric motor.

11. Drive system according to one of Claims 6 to 8, **characterized in that**
a hydraulic accumulator (32) is provided, which is charged by means of the hydraulic pump (26).

12. Drive system according to one of Claims 3 to 8, **characterized in that**
an arrangement (23) for influencing the rotational speed of the hollow wheel (22) is provided.

13. Drive system according to Claim 12,
**characterized in that**
the arrangement (23) is a brake arrangement for braking the hollow wheel (22).

14. Drive system according to Claim 12,
**characterized in that**
the arrangement (23) is a drive optionally for the braking or accelerating of the hollow wheel (22).

15. Drive system according to Claim 3 or 4, **characterized in that**
the plasticizing screw (110) is coupled with the cross-piece (124) of the planet wheels (120).

16. Drive system according to Claim 15,
**characterized in that**
a device, in particular a drive or a brake device, is provided for influencing the rotational speed of the hollow wheel (122).

17. Drive system according to Claim 16, **characterized in that**
an arrangement is provided for influencing the relative movement between the hollow wheel (122) and the sun wheel (118).

18. Drive system according to Claim 12, **characterized in that**
the device for influencing the relative movement between hollow wheel (122) and sun wheel (118) comprises a hydraulic pump conveying against a back pressure, or an electric motor.

19. Drive system according to Claim 12, **characterized in that**
the back pressure is adjustable via a proportional valve.

20. Drive system according to Claim 3,
**characterized in that**
the drive motor (216) is securely connected with the hollow wheel (222), that the sun wheel (218) is constructed as a spindle nut and the spindle (214) is securely connected with the plasticizing screw (210).

21. Drive system according to Claim 20, **characterized in that**
a device is provided for influencing the rotational speed of the planet wheels (220).

22. Drive system according to Claim 21, **characterized in that**
the device is a hydraulic pump conveying against a back pressure, or an electric motor.

23. Drive system according to Claim 22,
**characterized in that**
a proportional valve is provided, by which the back pressure is able to be adjusted.

24. Drive system according to one of Claims 22 or 23, **characterized in that**
a hydraulic accumulator is provided, which is charged by means of the hydraulic pump.

25. Drive system according to one of Claims 15 to 19, **characterized in that**
an arrangement is provided for influencing the relative speed between the hollow wheel (222) and the sun wheel (218) constructed as a spindle nut.

26. Drive system according to Claim 2 or 3, **characterized in that**
the drive motor (316) is securely coupled with the cross-piece (324) of the planet wheels, the sun wheel (318) is constructed as a spindle nut and the spindle (310) is securely connected with the plasticizing screw (210).

27. Drive system according to Claim 26,
**characterized in that**
a device is provided for influencing the relative movement between the hollow wheel (322) and the sun wheel (318).

28. Drive system according to Claim 27,
**characterized in that**
the device for influencing the relative movement between the hollow wheel (322) and the sun wheel (318) comprises a hydraulic pump conveying against a back pressure, or an electric motor.

29. Drive system according to Claim 23,
**characterized in that**
the back pressure is adjustable via a proportional valve.

30. Drive system according to one of the preceding claims, **characterized in that**
a device is provided for influencing the relative rotation between the spindle and the spindle nut.

31. Plasticizing unit with a plasticizing screw, held in a plasticizing cylinder, comprising a drive system according to one of Claims 1 to 29.

## Revendications

1. Système d'entraînement pour une unité de plastification d'une machine de moulage par injection dans lequel
- une vis sans fin de plastification (10, 110, 210, 310) mobile axialement et pouvant être entraînée de manière rotative est reçue dans un cylindre de plastification,
- comprenant au moins un moteur d'entraînement (16, 216, 316) pour entraîner la vis sans fin de plastification (10, 110, 210, 310) et
- une combinaison tige-écrou (14, 18 ; 114, 118 ; 214, 218 ; 314, 318) pour produire le mouvement axial de la vis sans fin de plastification (10, 110, 210, 310), sachant qu'entre le moteur d'entraînement (16, 216, 316) et la vis sans fin de plastification (10, 110, 210, 310), un engrenage de transfert de couple est prévu,
**caractérisé en ce que** la combinaison tige-écrou (14, 18 ; 114, 118 ; 214, 218 ; 314, 318) sert, en fonction du mode d'opération de l'engrenage de transfert de couple, également pour transmettre le mouvement de rotation pour la vis sans fin de plastification (10, 110, 210, 310).

2. Système d'entraînement selon la revendication 1,**caractérisé en ce que** l'engrenage de transfert de couple est un engrenage planétaire (12, 112, 212, 312), lequel présente au moins une roue solaire (18, 118, 218, 318) et au moins une roue planétaire (20, 120, 220, 320) et lequel est couplé côté entraînement au moteur d'entraînement (16, 216, 316) et côté sortie à la vis sans fin de plastification (10, 110, 210, 310).

3. Système d'entraînement selon la revendication 2, **caractérisé en ce qu'**une roue à denture intérieure (22, 122, 222, 322) est prévue coaxialement à la roue solaire (18, 118, 218, 318).

4. Système d'entraînement selon la revendication 2 ou 3, **caractérisé en ce qu'**un rotor du moteur d'entraînement (16) est couplé fixement à la tige (14, 114) et que la roue solaire (18, 118) est formée comme un écrou à tige ou que le rotor est couplé à l'écrou à tige et que la tige est reliée fixement à la roue solaire.

5. Système d'entraînement selon la revendication 4, **caractérisé en ce que** la vis sans fin de plastification (10) est reliée fixement à la roue à denture intérieure (22).

6. Système d'entraînement selon la revendication 5, **caractérisé en ce qu'**un dispositif (26, 30) est prévu pour influencer la vitesse de circulation des roues planétaires (20).

7. Système d'entraînement selon la revendication 7, **caractérisé en ce qu'**il s'agit pour le dispositif d'une pompe hydraulique (26) qui refoule contre une pression dynamique.

8. Système d'entraînement selon la revendication 7, **caractérisé en ce qu'**une soupape proportionnelle (30) est prévue avec laquelle la pression dynamique peut être réglée.

9. Système d'entraînement selon l'une des revendications 5 à 8, **caractérisé en ce qu'**un dispositif est prévu pour influencer la vitesse de rotation des roues planétaires (20).

10. Système d'entraînement selon la revendication 9, **caractérisé en ce qu'**il s'agit pour le dispositif pour influencer la vitesse de rotation des roues planétaires d'un entraînement hydraulique, pneumatique ou électrique, en particulier d'un moteur électrique.

11. Système d'entraînement selon l'une des revendications 6 à 8, **caractérisé en ce qu'**un accumulateur hydraulique (32) est prévu qui est chargé à l'aide de la pompe hydraulique (26).

12. Système d'entraînement selon l'une des revendications 3 à 8, **caractérisé en ce qu'**un dispositif (23) est prévu pour influencer la vitesse de rotation de la roue à denture intérieure (22).

13. Système d'entraînement selon la revendication 12, **caractérisé en ce qu'**il s'agit pour le dispositif (23) d'un dispositif de freinage pour ralentir la roue à denture intérieure (22).

14. Système d'entraînement selon la revendication 12, **caractérisé en ce qu'**il s'agit pour le dispositif (23) d'un entraînement au choix pour ralentir ou accélérer la roue à denture intérieure (22).

15. Système d'entraînement selon la revendication 3 ou 4, **caractérisé en ce que** la vis sans fin de plastification (110) est couplée à la traverse (124) des roues planétaires (120).

16. Système d'entraînement selon la revendication 15, **caractérisé en ce qu'**un dispositif, en particulier un entrainement ou un dispositif de freinage, est prévu pour influencer la vitesse de circulation de la roue à denture intérieure (122).

17. Système d'entraînement selon la revendication 16, **caractérisé en ce qu'**un dispositif pour influencer le mouvement relatif est prévu entre la roue à denture intérieure (122) et la roue solaire (118).

18. Système d'entraînement selon la revendication 12, **caractérisé en ce que** le dispositif pour influencer le mouvement relatif entre la roue à denture intérieure (122) et la roue solaire (118) comprend une pompe hydraulique refoulant contre la pression dynamique ou un moteur électrique.

19. Système d'entraînement selon la revendication 12, **caractérisé en ce que** la pression dynamique est réglable par une soupape proportionnelle.

20. Système d'entraînement selon la revendication 3, **caractérisé en ce que** le moteur d'entraînement (216) est relié fixement à la roue à denture intérieure (222), que la roue solaire (218) est formée comme un écrou à tige et que la tige (214) est reliée fixement à la vis sans fin de plastification (210).

21. Système d'entraînement selon la revendication 20, **caractérisé en ce qu'**un dispositif est prévu pour influencer la vitesse de circulation des roues planétaires (220).

22. Système d'entraînement selon la revendication 21, **caractérisé en ce qu'**il s'agit pour le dispositif d'une pompe hydraulique refoulant contre la pression dynamique ou d'un moteur électrique.

23. Système d'entraînement selon la revendication 22, **caractérisé en ce qu'**une soupape proportionnelle est prévue avec laquelle la pression dynamique est réglable.

24. Système d'entraînement selon l'une des revendications 22 ou 23, **caractérisé en ce qu'**un accumulateur hydraulique est prévu qui est chargé à l'aide de la pompe hydraulique.

25. Système d'entraînement selon l'une des revendications 15 à 19, **caractérisé en ce qu'**un dispositif est prévu pour influencer le mouvement relatif entre la roue à denture intérieure (222) et la roue solaire (218) formée comme un écrou à tige.

26. Système d'entraînement selon la revendication 2 ou 3, **caractérisé en ce que** le moteur d'entraînement (316) est couplé fixement à la traverse (324) des roues planétaires, que la roue solaire (318) est formée comme un écrou à tige et que la tige (310) est reliée fixement à la vis sans fin de plastification (210).

27. Système d'entraînement selon la revendication 26, **caractérisé en ce qu'**un dispositif est prévu pour influencer le mouvement relatif entre la roue à denture intérieure (322) et la roue solaire (318).

28. Système d'entraînement selon la revendication 27, **caractérisé en ce que** le dispositif pour influencer le mouvement relatif entre la roue à denture intérieure (322) et la roue solaire (318) comprend une pompe hydraulique refoulant contre la pression dynamique ou un moteur électrique.

29. Système d'entraînement selon la revendication 23, **caractérisé en ce que** la pression dynamique est réglable par une soupape proportionnelle.

30. Système d'entraînement selon l'une des revendications précédentes, **caractérisé en ce qu'**un dispositif est prévu pour influencer la rotation relative entre la tige et l'écrou à tige.

31. Unité de plastification avec une vis de plastification sans fin reçue dans un cylindre de plastification avec un système d'entraînement selon l'une des revendications 1 à 29.
